**Europäisches Patentamt**

**European Patent Office**

**Office européen des brevets**

(19)

(11) Veröffentlichungsnummer: **0 011 309**
**A1**

(12) **EUROPÄISCHE PATENTANMELDUNG**

(21) Anmeldenummer: **79104599.0**

(22) Anmeldetag: **19.11.79**

(51) Int. Cl.³: **B 65 D 51/00**

(30) Priorität: **20.11.78 DE 2850277**

(43) Veröffentlichungstag der Anmeldung:
**28.05.80 Patentblatt 80/11**

(84) Benannte Vertragsstaaten:
**BE DE FR GB IT SE**

(71) Anmelder: **Blau KG Fabrik für Kraftfahrzeugteile**
**Schneiderstrasse 13-17 Postfach 2024**
**D-4018 Langenfeld(DE)**

(72) Erfinder: **Gerdes, Theodor**
**Tilmann-Riemenschneider-Weg 6**
**D-4018 Langenfeld(DE)**

(74) Vertreter: **Schaumburg, Karl-Heinz et al,**
**Patentanwälte Schaumburg, Schulz-Dörlam & Thoenes**
**Mauerkircherstrasse 31**
**D-8000 München 80(DE)**

(54) **Verschlussdeckel mit Sprengsitzlagerung zwischen Aussenkappe und Deckelinnenteil.**

(57) Bei einem Verschlußdeckel für Rohrstutzen sind ein Deckelinnenteil (9) mit einem radial abstehenden Dichtungsflansch (11) und eine diesen übergreifende Außenkappe (1) durch Rastmittel lösbar miteinander verbunden. Die Rastmittel umfassen von der Kappenwand (3) radial einwärts gerichtete, den Dichtungsflansch (11) untergreifende Vorsprünge (13) mit jeweils einer radial nach innen und zum Kappenboden (2) hin gerichteten Einweisungsfläche (14) und einer zur Anlage an dem Dichtungsflansch (11) bestimmte Stützfläche (15). Diese ist ausgehend vom radial inneren Ende der Einweisungsfläche (14) konvex zur Kappenwand (3) hin gekrümmt, wobei der Dichtungsflansch (11) mit seinem Rand auf der Stützfläche (15) aufliegt. Dadurch kann die Außenkappe (1) beim Einwirken einer Kraft vorbestimmter Größe von dem Deckelinnenteil (9) abgesprengt und eine Beeinträchtigung der Schließfunktion der den Rohrstutzen verschließenden Deckelinnenteils (9) durch die einwirkende Kraft vermieden werden.

FIG. 2

EP 0 011 309 A1

- 1 -

## Verschlußdeckel mit Sprengsitzlagerung zwischen Außenkappe und Deckelinnenteil

Die Erfindung betrifft einen Verschlußdeckel für Rohrstutzen, insbesondere für Einfüllstutzen von Kraftstoffbehältern in Kraftfahrzeugen, umfassend ein zum Eingriff in den Rohrstutzen bestimmtes und einen im wesentlichen radial gerichteten Dichtungsflansch aufweisendes Deckelinnenteil und eine den Dichtungsflansch übergreifende, mit diesem durch Rastmittel verbindbare und aus einem mindestens geringfügig elastischen Material bestehende Außenkappe, wobei die Rastmittel von der Innenseite der Kappenwand radial einwärts gerichtete Vorsprünge umfassen, welche im zusammengebauten Zustand von Deckelinnenteil und Außenkappe den Dichtungsflansch hintergreifen und jeweils eine radial nach innen und zum Kappenboden hin gerichtete Einweisungsfläche sowie eine an diese angrenzende, zur Anlage am Dichtungsflansch bestimmte Stützfläche aufweisen.

Ein solcher Verschlußdeckel ist beispielsweise aus dem Deutschen Gebrauchsmuster 77 23 468 der Anmelderin bekannt. Dabei werden Innendeckelteil und Außenkappe in der Weise miteinander verbunden, daß das Innendeckelteil mit dem Dichtungsflansch auf die Einweisungsflächen der Vorsprünge aufgesetzt und in die Außenkappe hineingedrückt wird, wobei die Vorsprünge unter elastischer
Verformung der Kappenwand ausweichen und nach Vorbeigleiten des Dichtungsflansches in ihre ursprüngliche
Lage zurückschnappen. Die Stützfläche an den Vorsprüngen
ist bei der bekannten Ausführungsform im wesentlichen
radial gerichtet und liegt im zusammengebauten Zustand
von Innendeckelteil und Außenkappe an der dem Kappenboden abgewandten Fläche des Dichtungsflansches flach
an.

Bei der bevorzugten Verwendung des eingangs genannten
Verschlußdeckels zum Verschließen von Kraftstoffbehältern in Kraftfahrzeugen besteht die Gefahr, daß bei einem
Unfall durch die Verformung der Karosserie relativ große
Kräfte auf die Außenkappe einwirken. Da die Außenkappe
bei der bekannten Ausführung nach dem Einrasten des
Innendeckelteils hinter den Vorsprüngen der Außenkappe
praktisch unlösbar mit dem Innendeckelteil verbunden
ist, besteht die Gefahr, daß die auf die Außenkappe wirkenden Kräfte auf das Innendeckelteil übertragen werden
und dieses dadurch nicht mehr dicht abschließend auf dem
Stutzenrand sitzt.

Eine erste Möglichkeit, diese Gefahr zu beseitigen, besteht darin, die Außenkappe aus einem Material auszubilden, das hinreichend schwach ist, so daß die Außenkappe vor einer Beschädigung des Deckelinnenteils durch
Abreißen der Vorsprünge von dem Deckelinnenteil getrennt
wird. Das hat den Nachteil, daß zum einen die Außenkappe
nicht noch einmal verwendet werden kann und daß zum anderen
die zum Abreißen der Außenkappe von dem Deckelinnenteil
erforderliche Brechkraft nicht genau definiert werden
kann.

Aus der DE-OS 26 57 747 ist es ferner bekannt, Deckelinnenteil und Außenkappe durch eine Schnappverriegelung derart lösbar miteinander zu verbinden, daß sich die Außenkappe unter der Einwirkung von Kräften, wie sie beispielsweise bei einem Auffahrunfall auftreten können, vom Deckelinnenteil löst, so daß die auf die Außenkappe einwirkenden Kräfte nicht auf das Deckelinnenteil oder über dieses auf den Einfüllstutzen übertragen werden können. Diese aus der DE-OS 26 57 747 bekannte Lösung ist jedoch relativ aufwendig, da zur Verbindung des Deckelinnenteils mit der Außenkappe sowohl an letzterer wie auch dem Deckelinnenteil speziell hierfür vorgesehene Rastelemente angeordnet sein müssen.

Der Erfindung liegt die Aufgabe zugrunde, einen Verschlußdeckel der eingangs genannten Art auf einfachste Weise so auszubilden, daß bei auf die Außenkappe einwirkenden Kräften vorbestimmter Größe die Außenkappe zerstörungsfrei von dem Deckelinnenteil getrennt wird.

Diese Aufgabe wird erfindungsgemäß dadurch gelöst, daß die Stützfläche von einer im wesentlichen konvexen Über-gangsrundung zwischen dem radial inneren Rand der Einweisungsfläche und der Kappenwand oder einer im wesentlichen radial verlaufenden, zum Kappenboden weisenden Grenzfläche des jeweiligen Vorsprungs gebildet ist und daß die radialen Abmessungen des Dichtungsflansches relativ zu der Außenkappe so bemessen sind, daß der Dichtungsflansch mit seinem Randbereich radial innerhalb der Stützfläche liegt.

Durch die erfindungsgemäße Ausbildung wird erreicht, daß das Deckelinnenteil nur in einem sehr schmalen radialen Randbereich des Dichtungsflansches von den Vorsprüngen erfaßt wird. Der Rand des Dichtungsflansches liegt an den Stützflächen der Vorsprünge praktisch nur längs einer Berührungslinie an. Dadurch lassen sich die Reibungskräfte zwischen dem Rand des Dichtungsflansches und den Vorsprüngen bei Abheben der Außenkappe von dem Deckelinnenteil relativ genau bestimmen. Durch die erfindungsgemäße Ausbildung der Stützfläche entsteht bei einer an an der Außenkappe im Sinne eines Abhebens derselben von dem Deckelinnenteil wirkenden axialen Kraftkomponente automatisch eine radiale Kraftkomponente, welche die Kappenwand im Bereich der Vorsprünge radial nach außen drückt, so daß die Vorsprünge unter dem Dichtungsflansch herausschnappen und damit die Außenkappe von dem Deckelinnenteil freigeben. Die erfindungsgemäße Ausbildung ermöglicht somit ein zerstörungsfreies Abheben der Verschlußkappe von dem Deckelinnenteil und dies durch äußerst einfache Mittel bei einer mit relativ großer Genauigkeit bestimmbaren Abhebkraft. Da die zur Trennung von Außenkappe und Deckelinnenteil erforderliche Auslenkung der Vorsprünge nur sehr geringfügig ist, eignet sich die erfindungsgemäße Konstruktion insbesondere für Außenkappen, die aus einem relativ starren Material bestehen und/oder aufgrund ihrer Bauart nur eine relativ geringe Elastizität besitzen.

Sowohl das Aufdrücken der Außenkappe auf den Deckelinnenteil als auch das Abheben der Außenkappe von dem Deckelinnenteil wird dadurch erleichtert, daß die Stützfläche - in einem die Deckelachse enthaltenden Schnitt betrachtet - im wesentlichen kreisbogenförmig gekrümmt ist. Vorzugsweise sind den Vorsprüngen von der Kappenwand radial nach innen ragende Auflageelemente zugeordnet, deren axialer Abstand von den Vorsprüngen im wesentlichen gleich der axialen Ausdehnung des Randbereiches des Dichtungsflansches ist. Das gibt die Möglichkeit, den Rand des Dichtungsflansches zwischen den Auflageelementen und den Stützflächen einzuspannen und dennoch einen Zwischenraum zwischen dem Dichtungsflansch und dem Kappenboden frei zu lassen. Ein solcher Zwischenraum ist in den Fällen von Vorteil, wo das Deckelinnenteil ein Überdruckventil zum Belüften des verschlossenen Behälters aufweist. Zudem besteht damit die Möglichkeit, Außenkappe und Deckelinnenteil ohne große Reibung frei gegeneinander zu verdrehen, wenn die Außenkappe mit einem in das Deckelinnenteil eingreifenden Zylinderschloß versehen ist, welches in seiner einen Stellung die Außenkappe drehfest mit dem Deckelinnenteil verbindet und damit ein Öffnen und Schließen des Verschlußdeckels ermöglicht, und in seiner anderen Stellung die drehfeste Verbindung zwischen Außenkappe und Deckelinnenteil löst.

Um eine Zentrierung des Dichtungsflansches innerhalb der Außenkappe zu erreichen, sind vorzugsweise an der Innenumfangsfläche der Kappenwand radial nach innen von dieser vorspringende Abstandselemente angeordnet. Dadurch ist sichergestellt, daß sämtliche Vorsprünge den Rand des Dichtungsflansches in radialer Richtung gleich weit hintergreifen. Die Abstandselemente sind vorzugsweise von Verdickungen der Kappenwand im Bereich der Vorsprünge gebildet. Diese Verdickungen haben den zusätzlichen Vorteil, daß sie die Gefahr eines Abreißens der Vorsprünge beim gewaltsamen Abheben der Außenkappe von dem Deckelinnenteil vermindern.

Vorzugsweise ist der Rand des Dichtungsflansches - in einem die Deckelachse enthaltenden Schnitt betrachtet - im wesentlichen kreisbogenförmig gekrümmt, so daß sichergestellt ist, daß der Dichtungsflansch nur längs einer Berührungslinie auf den Stützflächen der Vorsprünge aufliegt. Eine relativ exakte Krümmung des Randes des Dichtungsflansches kann auf einfachste Weise dadurch erhalten werden, daß das Deckelinnenteil doppelwandig ausgebildet ist und daß im Randbereich des Dichtungsflansches der Rand des einen Wandteiles um den Rand des anderen Wandteiles umgebördelt ist. Falls der Dichtungsflansch zur Ausbildung einer stetigen Randkrümmung immer noch zu dünn sein sollte, kann zwischen die beiden Wandteile in dem Randbereich des Dichtungsflansches ein zusätzlicher Ring eingelegt werden.

Mit der erfindungsgemäßen Lösung wird erreicht, daß bei quer zur Deckelachse wirkenden Kräften die Außenkappe zerstörungsfrei von dem Deckelinnenteil abgesprengt werden kann, so daß keine wesentlichen Kräfte auf das Deckelinnenteil übertragen werden und dieses somit fest und dicht auf dem Rohrstutzen sitzenbleiben kann.

Weitere Merkmale und Vorteile der Erfindung ergeben sich aus der folgenden Beschreibung, welche in Verbindung mit den beiliegenden Zeichnungen die Erfindung anhand eines Ausführungsbeispiels erläutert. Es zeigen:

Fig. 1 eine Ansicht der Außenkappe des erfindungsgemäßen Verschlußdeckels von unten,

Fig. 2 einen Schnitt durch die in Fig. 1 dargestellte Außenkappe und einen Abschnitt des Deckelinnenteils längs Linie II-II in Fig. 1,

Fig. 3 einen Teilschnitt längs Linie III-III in Fig. 1,

Fig. 4 einen Teilschnitt längs Linie IV-IV in Fig. 1,

Fig. 5 eine der Fig. 3 entsprechende Schnittansicht durch eine abgewandelte Ausführungsform der Erfindung und

Fig. 6 eine dem Schnittverlauf der Schnittlinie II-II entsprechenden Teilschnitt durch die abgewandelte Ausführungsform der Außenkappe.

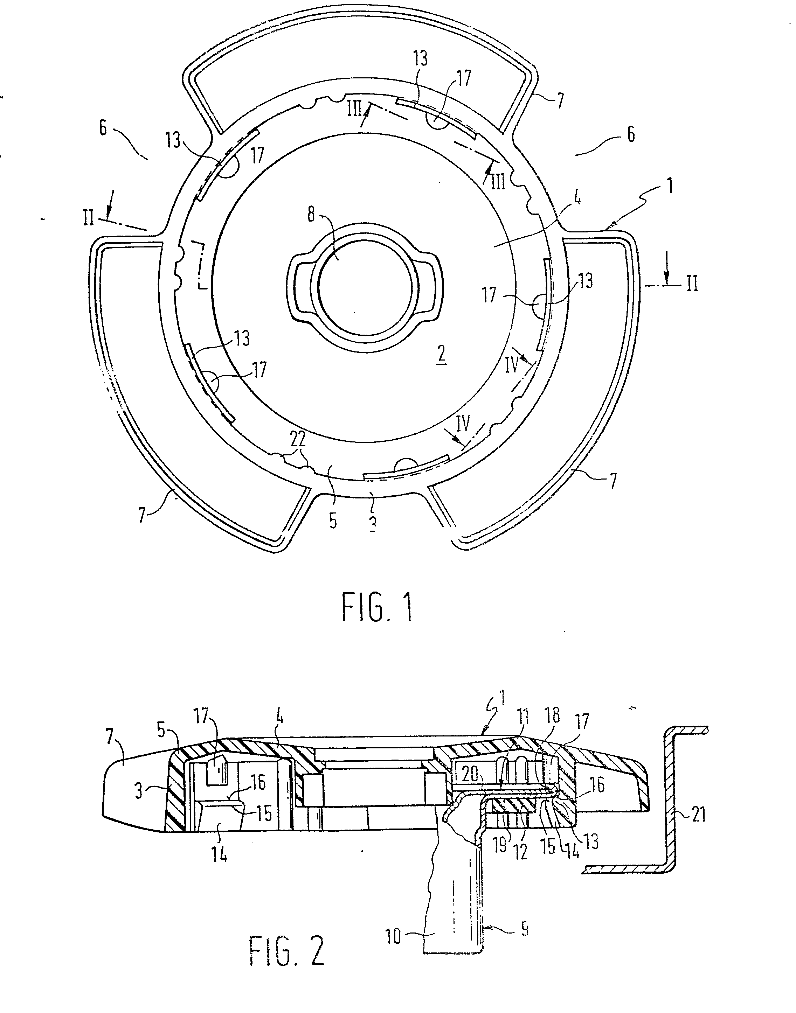

In Fig. 1 erkennt man eine Außenkappe 1 mit einem Kappenboden 2 und einer im wesentlichen zylindrischen Kappenwand 3. Der Kappenboden 2 weist einen im wesentlichen konisch nach innen abfallenden Mittelabschnitt 4 und einen diesen umgebenden konisch nach außen hin abfallenden Ringabschnitt 5 auf. Am Außenumfang der Kappenwand 3 sind durch gleich große Zwischenräume 6 voneinander getrennt drei Griffstücke 7 einstückig mit der Kappenwand 3 ausgebildet. Im Zentrum des Kappenbodens 2 ist eine Durchtrittsöffnung 8 zum Einstecken eines nicht dargestellten Zylinderschlosses ausgebildet, welches dazu dient, die Außenkappe 1 mit einem in Fig. 2 nur andeutungsweise dargestellten Deckelinnenteil 9 drehfest zu verbinden oder die Außenkappe 1 für eine Drehung gegenüber dem Deckelinnenteil 9 freizugeben.

Das Deckelinnenteil 9 umfaßt einen nicht näher dargestellten topfförmigen Verschlußkörper 10, der in einen nicht dargestellten, zu verschließenden Rohrstutzen eingreift, sowie einen von dem Verschlußkörper 10 radial abstehenden Dichtungsflansch 11. Der Dichtungsflansch trägt auf seiner Unterseite eine Ringdichtung 12, die gegen den Stutzenrand gespannt wird, wenn das Deckelinnenteil 9 mit seinem Verschlußkörper 10 in den Rohrstutzen eingreift und mittels eines nicht dargestellten Gewindes oder einer Bajonettverriegelung festgezogen wird.

Für die Rastverbindung oder Sprengsitzlagerung des Deckelinnenteiles 9 an der Außenkappe 1 weist diese an der Innenseite der Kappenwand 3 in regelmäßigen Abständen voneinander angeordnete Vorsprünge oder Nasen 13 auf, die im wesentlichen koaxial zur Deckelachse gekrümmt sind.

Die Vorsprünge 13 sind jeweils mit einer Einweisungsfläche 14 versehen, die sich von dem freien Rand der Kappenwand 3 radial nach innen und zum Kappenboden 2 hin erstreckt und über eine Übergangsrundung 15 in eine im wesentlichen radiale Grenzfläche 16 übergeht. Jedem Vorsprung 13 ist ein Auflageelement 17 zugeordnet, das sich von dem Kappenboden 2 aus in Richtung auf den Vorsprung 13 erstreckt und von diesem einen Abstand hat, der im wesentlichen der axialen Abmessung des Dichtungsflansches 11 an dessen äußerem Rand entspricht. Wird die Außenkappe 1 auf den Dichtungsflansch 11 des Deckelinnenteiles 9 aufgesetzt, so daß der Rand des Dichtungsflansches 11 an den Einweisungsflächen 14 anliegt, und hierauf auf das Deckelinnenteil 9 aufgedrückt, so weichen die Vorsprünge 13 unter einer leichten Verformung der Kappenwand 3 radial nach außen aus, bis der Dichtungsflansch 11 mit seinem Rand in den Zwischenraum zwischen den Vorsprüngen 13 und den Auflageelementen 17 einrastet.

Wie man aus Fig. 2 erkennt, ist der Außenrand des Dichtungsflansches 11 - in einem die Deckelachse enthaltenden Schnitt betrachtet - im wesentlichen kreisbogenförmig gekrümmt und der Dichtungsflansch 11 selber so bemessen, daß er mit seinem Rand auf der als Stützfläche dienenden Übergangsrundung 15 aufliegt. Durch die konvexe Krümmung der Übergangsrundung 15 und des Randes des Dichtungsflansches 11 liegt dieser praktisch nur längs einer Berührungslinie an den Vorsprüngen 13 an. Das heißt, der Dichtungsflansch 11 wird nur in einem sehr schmalen radialen Bereich von den Vorsprüngen 13 unterstützt. Um eine möglichst linienförmige Berührung zu gewährleisten, ist der radial äußere Rand des Dichtungsflansches 11 - in dem Schnitt der Fig. 2 betrachtet - im wesentlichen kreisbogenförmig gekrümmt. Die gleichförmige Krümmung wird dadurch erreicht, daß der

0011309

radial äußere Rand 18 der Außenwand 19 des doppelwandig ausgeführten Deckelinnenteils 9 um den radial äußeren Rand der Innenwand 20 umgebogen ist.

Werden bei einer Verformung der bei 21 in Fig. 2 angedeuteten Karosserie beispielsweise infolge eines Fahrzeugunfalles unvorhersehbar starke Kräfte auf den Verschlußdeckel ausgeübt, so kann infolge der geringen Berührungsfläche zwischen dem Dichtungsflansch 11 und den Vorsprüngen 13 sowie der Neigung der Stützfläche 15 gegenüber der Deckelachse die Außenkappe 1 von dem Dichtungsflansch 11 des Deckelinnenteiles 9 abgesprengt werden, ohne daß die an der Außenkappe 1 angreifenden Kräfte auf das Deckelinnenteil 9 übertragen werden. Somit bleibt der Dichtungsflansch 11 des den Rohrstutzen verschließenden Deckelinnenteiles 9 mit seiner Ringdichtung 12 fest gegen den Stutzenrand gespannt. Aufgrund der geringen Berührungsfläche zwischen dem Dichtungsflansch 11 und den Vorsprüngen 13 ist auch die zum Absprengen der Außenkappe 1 benötigte Kraft mit hinreichender Genauigkeit bestimmbar.

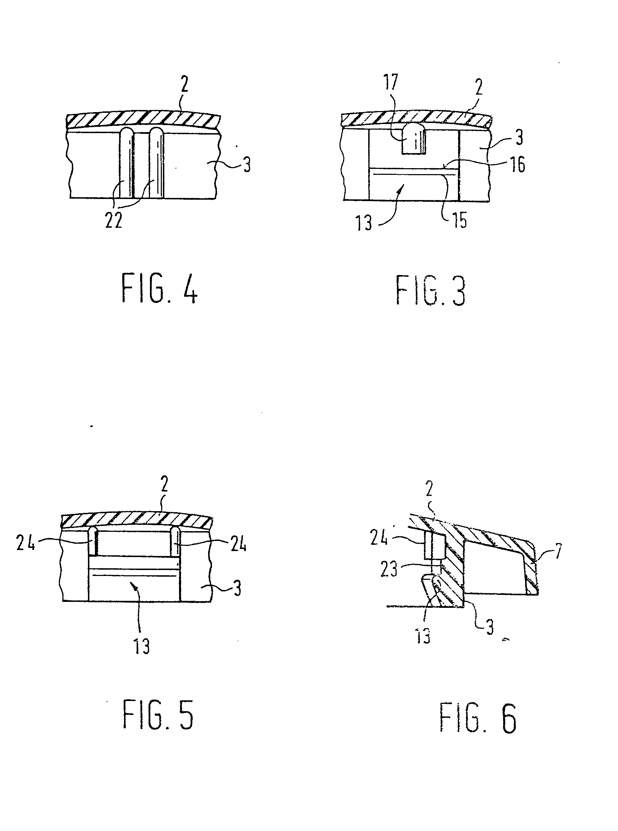

Gemäß der Darstellung in den Fig. 1, 2 und 4 sind zwischen den Vorsprüngen 13 an der Innenseite der Kappenwand 3 jeweils zwei achsparallel verlaufende halbzylindrische Vorsprünge 22 ausgebildet, die als Zentrierelemente dienen, um das Deckelinnenteil 9 mit seinem Dichtungsflansch 11 innerhalb der Außenkappe 1 zu zentrieren und damit auch für gleichmäßige Auflagebedingungen an allen Vorsprüngen 13 zu sorgen. Diese Zentrierung kann gemäß der Fig. 6 auch durch eine Verdickung 23 der Kappenwand 3 im Bereich der Vorsprünge 13 erfolgen. Diese Verdickung 23 hat darüber hinaus den Vorteil, daß sie die Hinterschneidung der Vorsprünge 13 verkleinert und damit die Gefahr verringert, daß die Vorsprünge 13

0011309

beim gewaltsamen Absprengen der Außenkappe 1 von dem Deckelinnenteil 9 abgerissen werden. Die bei dem Ausführungsbeispiel gemäß den Fig. 1 bis 4 verwendeten Zentrierelemente oder Rippen 22 können auch dazu verwendet werden, eine drehfeste Verbindung zwischen dem Deckelinnenteil 9 und der Außenkappe 1 herzustellen.

Gemäß Fig. 5 kann das bei dem Ausführungsbeispiel gemäß den Fig. 1 bis 4 verwendete einzige Auflageelement 17 auch durch zwei Auflageelemente 24 ersetzt werden, die im Bereich der beiden Enden jedes Vorsprunges 13 angeordnet sind. Dadurch wird eine bessere Halterung des Randes des Dichtungsflansches 11 zwischen den Auflageelementen und den Vorsprüngen erreicht.

Patentansprüche

1. Verschlußdeckel für Rohrstutzen, insbesondere für Einfüllstutzen von Kraftstoffbehältern in Kraftfahrzeugen, umfassend ein zum Eingriff in den Rohrstutzen bestimmtes und einen im wesentlichen radial gerichteten Dichtungsflansch (11) aufweisendes Deckelinnenteil (9) und eine den Dichtungsflansch (11) übergreifende, mit diesem durch Rastmittel (13) verbindbare und aus einem mindestens geringfügig elastischen Material bestehende Außenkappe (1), wobei die Rastmittel von der Innenseite der Kappenwand (3) radial einwärts gerichtete Vorsprünge (13) umfassen, welche im zusammengebauten Zustand von Deckelinnenteil (9) und Außenkappe (1) den Dichtungsflansch (11) hintergreifen und jeweils eine radial nach innen und zum Kappenboden (2) hin gerichtete Einweisungsfläche (14) sowie eine an diese angrenzende, zur Anlage am Dichtungsflansch (11) bestimmte Stützfläche (15) aufweisen, dadurch gekennzeichnet, daß die Stützfläche (15) von einer im wesentlichen konvexen Übergangsrundung zwischen dem radial inneren Rand der Einweisungsfläche (14) und der Kappenwand (3) oder einer im wesentlichen radial verlaufenden, zum Kappenboden (2) weisenden Grenzfläche (16) des jeweiligen Vorsprungs (13) gebildet ist und daß die radialen Abmessungen des Dichtungsflansches (11) relativ zu der Außenkappe (1) so bemessen sind, daß der Dichtungsflansch (11) mit seinem Randbereich radial innerhalb der Stützfläche (15) liegt.

2. Verschlußdeckel nach Anspruch 1, dadurch gekennzeichnet, daß die Stützfläche (15) - in einem die Deckelachse enthaltenden Schnitt betrachtet - im wesentlichen kreisbogenförmig gekrümmt ist.

3. Verschlußdeckel nach Anspruch 1 oder 2, dadurch gekennzeichnet, daß den Vorsprüngen (13) von der Kappenwand (3) radial nach innen ragende Auflageelemente (17; 24) zugeordnet sind, deren axialer Abstand von den Vorsprüngen (13) im wesentlichen gleich der axialen Ausdehnung des Randbereiches des Dichtungsflansches (11) ist.

4. Verschlußdeckel nach einem der Ansprüche 1 bis 3, dadurch gekennzeichnet, daß an der Innenseite der Kappenwand (3) radial nach innen von dieser vorspringende Abstandselemente (12; 23) angeordnet sind.

5. Verschlußdeckel nach Anspruch 4, dadurch gekennzeichnet,daß die Abstandselemente (23) von Verdickungen der Kappenwand (3) im Bereich der Vorsprünge (13) gebildet sind.

6. Verschlußdeckel nach einem der Ansprüche 1 bis 5, dadurch gekennzeichnet, daß der Rand des Dichtungsflansches (11) - in einem die Deckelachse enthaltenden Schnitt betrachtet - im wesentlichen kreisbogenförmig gekrümmt ist.

7. Verschlußdeckel nach einem der Ansprüche 1 bis 6, dadurch gekennzeichnet, daß das Deckelinnenteil (9) doppelwandig ausgebildet ist und daß im Randbereich des Dichtungsflansches (11) der Rand des einen Wandteiles (19; 20) um den Rand des anderen Wandteiles (20; 19) umgebördelt ist.

8. Verschlußdeckel nach Anspruch 7, dadurch gekennzeichnet, daß zwischen den beiden Wandteilen (19, 20) im Randbereich des Dichtungsflansches (11) ein Ring eingelegt ist.

FIG. 1

FIG. 2

FIG. 4

FIG. 3

FIG. 5

FIG. 6

0011309

Nummer der Anmeldung

EP 79 10 4599

Europäisches
Patentamt

**EUROPÄISCHER RECHERCHENBERICHT**

| | EINSCHLÄGIGE DOKUMENTE | | | KLASSIFIKATION DER ANMELDUNG (Int.Cl. ³) |
|---|---|---|---|---|
| Kategorie | Kennzeichnung des Dokuments mit Angabe. soweit erforderlich, der maßgeblichen Teile | betrifft Anspruch | | |
| P | DE - A - 2 734 394 (BLAU KG FABRIK FÜR KRAFTFAHRZEUGTEILE)<br><br>× Als ganzes ×<br><br>& FR - A - 2 398 673<br><br>-- | 1-4,6-8 | | B 65 D 51/00 |
| P | DE - A - 2 733 860 (BLAU KG FABRIK FÜR KRAFTFAHRZEUGTEILE)<br><br>× Als ganzes ×<br><br>& FR - A - 2 398 674<br><br>-- | 1-4,6 | | |
| AD | DE - A - 2 657 747 (VOLKSWAGEN-WERK AG)<br><br>---- | 1 | | RECHERCHIERTE SACHGEBIETE (Int. C. ³)<br><br>B 65 D<br>B 60 K |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-02-1980 | BAERT |

EPA form 1503.1   06.78